# EUROPEAN PATENT APPLICATION

(11) **EP 2 206 993 A1**
(43) Date of publication of application: **14.07.2010**
(21) Application number: 10150548.5
(22) Date of filing: 12.01.2010
(51) Int. Cl.: F24J 3/08

(54) **Vertical geothermal heat exchanger and method of installing the same**

(30) Priority: 13.01.2009 IT TO20090016
(71) Applicant: Trevi S.p.A., I-47023 Cesena (Forli) (IT)
(72) Inventor: Attala, Daniele, I-47921, Rimini (IT)
(74) Representative: Fioravanti, Corrado

(57) **Abstract**

The heat exchanger (10) includes two rectilinear, coaxial tubes (11, 12) integral with one another and a peripheral tubular chamber (13) between the inner (11) and outer (12) tubes. Formed within the chamber (13) are a number of ducts including a delivery duct (15) running from the top to the bottom of the chamber (13) and a return duct (16) running from the bottom to the top of the chamber (13) for circulating a heat transfer fluid in a geothermal plant.

## Description

The present invention refers to the so-called vertical geothermal or heat exchangers used in the field of low temperature geothermal heating for exploiting the latent heat of the underground. Systems or plants working with geothermal power exploit the fact that the ground temperature, already just a few feet under the surface, remains almost constant through the various seasons of the year, owing to the solar radiation. Due to the constant temperature of the ground, heat is drawn from the ground in the winter for heating buildings, and heat is delivered to the ground in the summer for cooling buildings.

With many plants, heat is exchanged with the ground by means of one or more elongate heat exchangers installed vertically in boreholes of various depths. The heat exchangers are associated in closed loop with a geothermal heat pump which circulates a carrier fluid (typically a water/glycol 15-20% solution) for drawing and delivering heat from and to the ground.

In some applications tubular heat exchangers shaped as an elongated, reversed U are used. The heat exchanger is installed by preliminary drilling a bore, the diameter and depth of which depends on the type of heat exchanger. Their number and depth vary as a function of the thermal energy required. After boring, a U-shaped pipe of polyethylene is inserted down to the desired depth. The empty space between the outer surface of the pipe and the wall of the borehole is filled with a high thermal conductivity mix (water-bentonite grout-cement-additives-quartz sand, etc.) in order to improve the contact and thus the heat transfer by conduction between the pipe of the heat exchanger and the borehole.

In other applications, typically in the high enthalpy geothermal field, i.e. for exchanging a great quantity of heat with rocks at 200-300°C, heat exchangers having two coaxial, rectilinear tubes are used. The carrier fluid is let in through the central cavity of the inner tube, and the same fluid returns up flowing through a tubular gap between the inner and outer tubes. Examples are found in DE-C1-199 19 555, US-A-4 201 060, US-A-5 339 890 and WO-A1-2008/009289. In a still different application, there have been proposed heat exchangers comprising a polyethylene tube helically wound around a cylindrical metal cage.

The objects of the present invention are to improve thermal efficiency of heat exchangers and install them as quickly and inexpensively as possible in any kind of ground.

These and other objects and advantages, that will be better understood herein after, are achieved according to the present invention by a heat exchanger and a method of inserting it into the ground as defined in the appended claims.

A preferred, but not limiting embodiment of the invention is described hereinafter with reference to the accompanying drawings, in which:
figures 1A-1C are diagrammatic, partially sectioned elevational views of a heat exchanger according to the invention, associated with a helical boring tool, during three different steps of the method of installing the heat exchanger;
figure 2 is an axial cross sectional view of the heat exchanger of figures 1A-1C;
figure 3 is a transversal cross sectional view taken along the line III-III of figure 2;
figures 4A-4C are diagrammatic, partially sectioned elevational views showing three different steps of the method of installing the heat exchanger according to the invention associated with a "DTH hammer" type of boring tool; and
figures 5A-5D are diagrammatic, partially sectioned elevational views depicting four steps of the insertion of a heat exchanger according to the invention by means of a still different boring tool.

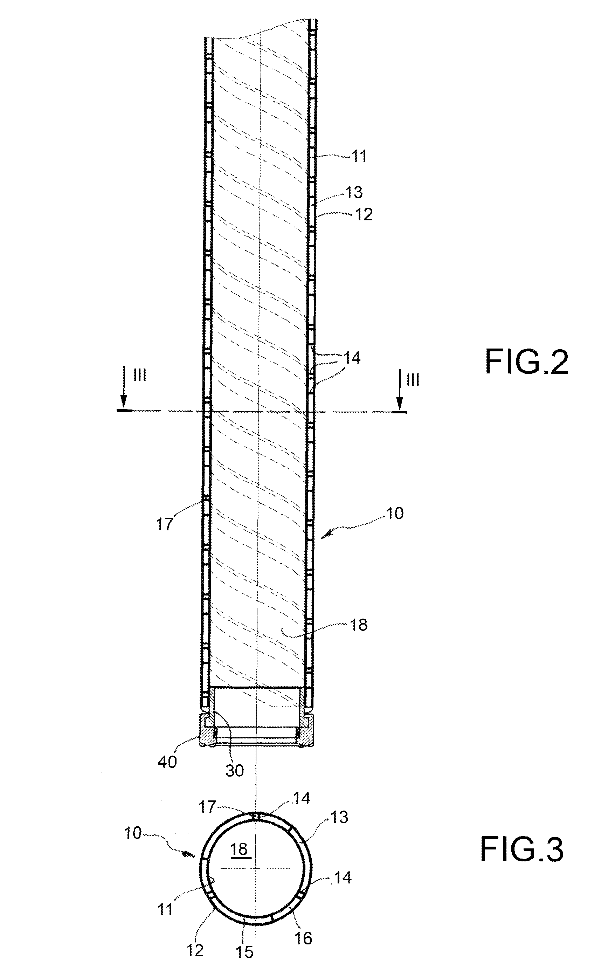

With reference initially to figures 2 and 3, a geothermal heat exchanger according to a preferred embodiment of the invention is designated as a whole at 10. The heat exchanger 10 includes two coaxial, rectilinear tubes, which are vertical in normal working conditions: an inner tube 11 and an outer tube 12, integral with one another and defining therebetween a peripheral tubular gap or chamber 13.

The chamber 13 is subdivided by pairs of continuous connecting portions 14 extending between the inner and outer tubes and arranged according to helicoidal surfaces, so as to form with the tubes 11, 12 a set of ducts 15, 16. Advantageously, ducts 15, 16 are arranged according to a multi-start helix wound around the inner cylindrical tube 11, preferably at a constant angle. In use, a heat transfer fluid is circulated through the ducts 15, 16.

In the preferred embodiment there are provided a plurality of ducts 15, herein termed "delivery" ducts, and a plurality of return ducts 16. The fluid is let in from above, through an upper pipe fitting (not shown) into the delivery ducts 15, and flows down through them to the foot or bottom where the delivery ducts connect to the return ducts 16 and flows back up to the surface through these ducts. At the bottom of the coaxial structure 11, 12 an annular manifold (not shown) may be provided for jointing the delivery ducts to the return ducts.

According to the preferred embodiment of the invention, the coaxial tubes 11, 12 and the connecting portions 14 are made in a single piece, advantageously of a relatively rigid plastic material. For the reasons set forth herein after, polypropylene or high density polyethylene (HDPE, PXa) are particularly well suited, since they are easy to extrude for obtaining a transversal cross section of the type shown in figure 3.

In the preferred embodiment of the invention, the ducts 15, 16 formed in the chamber 13 are arranged helically. This arrangement is advantageous since it extends, at equal overall length of the heat exchanger, the path followed by the fluid, and therefore optimizes thermal exchange with the surrounding soil. According to an alternative, less preferred embodiment, the ducts may be arranged longitudinally, i.e. parallel to the central, vertical axis of the heat exchanger.

In the embodiment shown in the drawings, the helical connecting portions also form one or more further ducts 17 which open towards the bottom of the heat exchanger. These ducts can be used for injecting waterproofing mortar having a high thermal conductivity in order to fill the empty spaces between the heat exchanger and the soil around it, and thereby increase thermal exchange between the fluid and the ground. In order to optimize the thermal exchange surface, the delivery and return ducts 15, 16 for the heat transfer fluid have a vertically elongate, rectangular shape when viewed in transversal or axial cross section.

The inner tube 11 defines a central, axial cavity 18 which is exploited for accommodating a boring tool 20, for example a helical boring tool, a roto-percussion boring tool or a tamping tool, suitable for forming a bore in the ground where the heat exchanger is to be fitted. As an alternative to a continuous helical tool, other tools may be used, such as a tri-cone tool, a three-blade drag bit, a bucket, a Down-The-Hole hammer, etc. The choice of the most appropriate tool will largely depend on the geological and hydro-geological features of the ground.

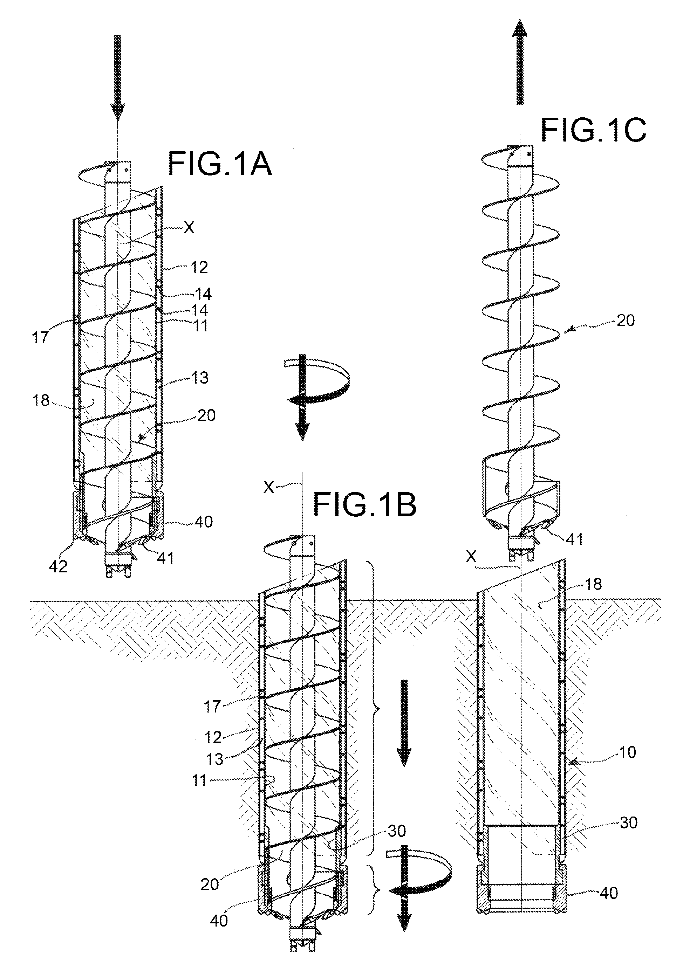

With reference to figures 1A-1C and 2, a collar 30 is securely fixed at the bottom end of the coaxial heat exchanger. A ring bit 40 is connected axially but released rotationally with respect to the collar 30. The ring bit 40 is locked to the boring tool 20 and has an outer diameter corresponding to that of the outer tube 12. The ring bit 40 is releasably coupled to the boring tool 20, for example by means of a bayonet mechanism with teeth 41 (visible in figure 1C) or similar interlocking means, so as to rotate as a unit with the helical tool when this is imparted a rotational motion about the vertical axis, thereby causing the helical tool to be driven into the ground and drill a bore.

The collar and the ring bit are hooked in such manner that downward movement of the ring bit will pull the collar down, along with the heat exchanger secured to the collar. The rotary component of the tool's motion will not be transmitted to the heat exchanger. Owing to this kind of coupling, during the step of installing the coaxial heat exchanger this is only subjected to a downward, vertical traction force, but it is not imparted any appreciable compressive or torsional stresses due to friction between the outer tube and the wall of the borehole being formed in the ground.

A preferred operational sequence of steps for installing a heat exchanger according to the invention provides for the heat exchanger to be arranged vertically on the ground surface (figure 1A) and associated with a boring apparatus (not shown). As known, rotational and translational movement of the boring tool about and along the axis x drives the bit into the ground and removes the soil, leaving a vertical borehole. Due to the bayonet coupling 41, the boring tool 20 drives the ring bit with it, which cuts into the soil by means of lower cutting elements or teeth 42. Owing to the interlock between the ring bit and the collar, the ring bit pulls the collar down, and so also the entire heat exchanger 10, but does not transfer the rotational component of the helical motion to these parts. The heat exchanger might perform some rotational movement is the very first few meters of the boring; nevertheless this rotation will soon be hindered by the friction occurring at the interface between the outer tube of the heat exchanger and the wall of the borehole.

After reaching the desired boring depth (figure 1B), the direction of rotation of the boring tool is reversed. The bayonet interlock coupling 41 allows the tool 20 to be released from the ring bit 40, which is left at the bottom of the borehole. Finally, the tool 20 is lifted, pulled out of the central cavity 18 (figure 1C) and recovered.

Injection of waterproofing mortar having a high thermal conductivity through the duct or ducts 17 may be done through outlet holes at the bottom of the heat exchanger and/or through further intermediate outlet holes equipped with closure valves.

As will be appreciated, the ducts for the heat transfer fluid are entirely located in the peripheral part of the heat exchanger, next to the ground. This optimizes thermal efficiency.

The use of the central axial cavity of the heat exchanger for accommodating the boring tool allows to perform boring and installation of the heat exchanger simultaneously instead of in two subsequent steps. The method is applicable to any type of soil by selecting the most appropriate boring tool, for boreholes of any width and depth.

The heat exchanger is pulled down from a gripping point located in its lower part. Thus, the heat exchanger body is subjected only to tensile forces while it is inserted into the ground. This allows to privilege those features of the heat exchanger which optimize thermal exchange, whereas the mechanical strength of the heat exchanger body becomes of secondary importance. Above all, the outer tube may be made particularly thin, and/or made out of a material which is less strong than others, but exhibits higher thermal conductivity.

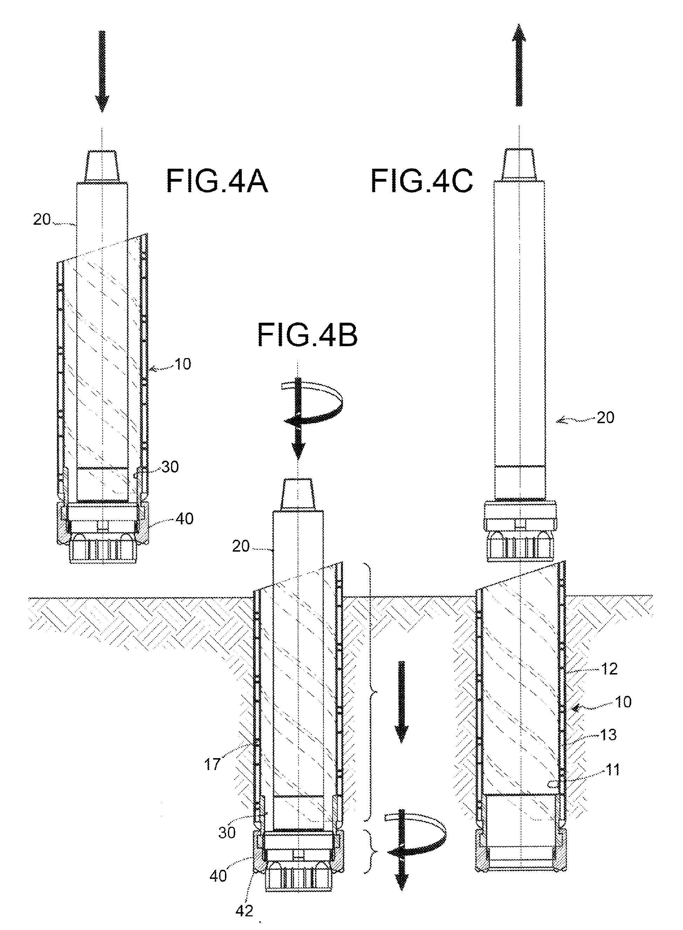

Figures 4A-4C show another embodiment of the method according to the invention wherein the boring tool 20 is a so-called *DTH hammer* which performs rotopercussive motion, known per se. The heat exchanger 10 with the collar 30 and the ring bit 40 are left at the bottom of the borehole at the end of the process, as shown in figure 1C.

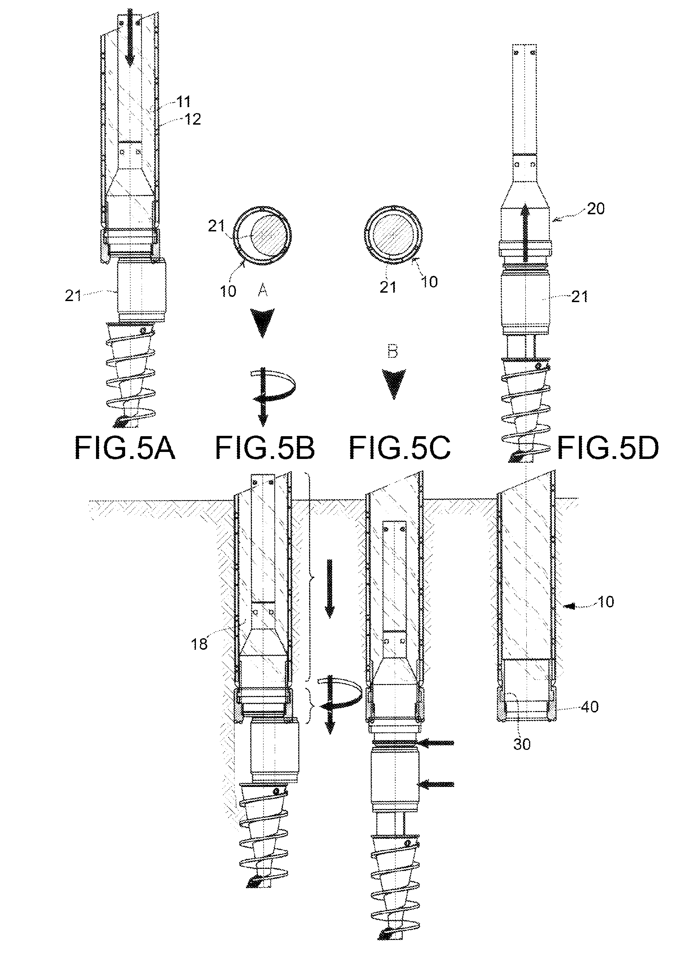

Shown in figures 5A-5D is an alternative embodiment wherein the boring tool 20 is associated with an eccentric barrel tamper 21.

The invention is not intended to be limited to the embodiments described and illustrated herein, which should be considered as illustrative examples of implementing the heat exchanger and the method of inserting it into the ground. Rather, the invention may be modified with regard to the shape, the size (lengths, diameters) and arrangement of parts, constructional and functional details, and materials used. For example, the number and cross-section of the ducts running in the peripheral chamber may vary as a function of the flow rate and pressure of the heat transfer fluid chosen by the designer.

## Claims

1. A vertical geothermal heat exchanger (10) including two rectilinear, coaxial tubes (11, 12) integral with one another and a peripheral tubular chamber (13) between the inner (11) and outer (12) tubes, **characterised in that** formed within the chamber (13) is a plurality of ducts including at least one delivery duct (15) running from the top to the bottom of the chamber (13) and at least one return duct (16) running from the bottom to the top of the chamber (13) for circulating a heat transfer fluid in a geothermal plant.

2. A heat exchanger according to claim 1, **characterized in that** the ducts (15, 16) are formed between the inner tube (11), the outer tube (12), and a plurality of connecting portions (14) extending continuously between the inner tube and the outer tube and dividing the peripheral chamber (13) into said plurality of ducts.

3. A heat exchanger according to claim 1 or 2, **characterized in that** the ducts and the connecting portions are arranged according to a multi-start helix wound around the inner cylindrical tube (11).

4. A heat exchanger according to claim 1 or 2 or 3, **characterized in that** the continuous portions (14) connecting the inner tube (11) with the outer tube (12) are arranged as helicoidal surfaces.

5. A heat exchanger according to any one of claims 2 to 4, **characterised in that** the coaxial tubes (11, 12) and the connecting portions (14) are made in a single piece of an extruded plastics material, such as polypropylene or high density polypropylene (HDPE, PXa).

6. A heat exchanger according to claim 1, **characterized in that** the ducts (15, 16) for the delivery and return of the heat transfer fluid have a vertically elongate shape in axial cross-section.

7. A heat exchanger according to claim 1, **characterized in that** formed within the chamber (13) is at least one further duct (17) having a lower opening for injecting a further fluid outwardly of the heat exchanger.

8. A heat exchanger according to any one of the preceding claims, **characterized by** further including:
- a collar (30) securely fixed to a lower end portion of at least one of the coaxial tubes (11, 12),
- an annular body (40) releasably lockable to a boring tool (20) which is at least partially accommodated within the central axial cavity (18) of the inner tube (11), and
- coupling means for mutually coupling the annular body (40) to the collar (30) in an axial direction, while allowing relative rotation of the annular body (40) with respect to the collar (30).

9. A heat exchanger according to claim 8, **characterized in that** the annular body (40) is a ring bit having an outer diameter corresponding to that of the outer tube (12) and provided at its bottom with soil crushing means (42).

10. A heat exchanger according to claim 8 or 9, **characterized in that** the means (41) for coupling the annular body (40) and the boring tool (20) include a bayonet mechanism.

11. A method of inserting a heat exchanger into the ground, the method including the steps of:
- providing a heat exchanger (10) according to any one of the preceding claims and having
- two rectilinear coaxial tubes secured to one another (11, 12),
- a peripheral tubular chamber (13) between the inner tube (11) and the outer tube (12),
- a plurality of ducts included in the peripheral chamber (13) and comprising at least one delivery duct (15) running from the top to the bottom of the chamber (13) and at least one return duct (16) running from the bottom to the top of the chamber (13) for circulating a heat transfer fluid in a geothermal plant,
- a central axial cavity (18) formed by the inner tube (11) and open from its bottom to its top;
- providing a boring tool (20) at least partially accommodated in the central axial cavity (18) of the inner tube (11);
- securing the tool (20) to a bottom part (40) of the heat exchanger;
- operating the tool (20) so as to bore the soil, consequently driving the heat exchanger downwards.

12. The method of claim 11, further including the final step of recovering the tool (20) by lifting it and extracting it through the central cavity (18).
